# EUROPEAN PATENT SPECIFICATION

(11) **EP 3 238 522 B1**
(45) Date of publication and mention of the grant of the patent: **17.07.2019**
(21) Application number: 17163201.1
(22) Date of filing: 28.03.2017
(51) Int. Cl.: A01D 34/00, A01D 42/06

(54) **SELF-PROPELLED WORK DEVICE**
SELBSTFAHRENDES ARBEITSGERÄT
ÉQUIPEMENT AUTOMOBILE

(30) Priority: 20.04.2016 IT UA20162742
(43) Date of publication of application: 01.11.2017
(73) Proprietor: Bernini, Fabrizio, 52021 Bucine - Arezzo (IT)
(72) Inventor: Bernini, Fabrizio, 52021 Bucine - Arezzo (IT)
(74) Representative: Milli, Simone

(56) References cited:
- EP-A1- 0 262 285
- US-A- 3 154 903
- US-A1- 2014 013 721

## Description

This invention relates to a self-propelled work device, in particular a self-propelled work device for cutting grass.

There are prior art self-propelled work devices comprising a frame supporting one or more motor-driven work modules, for example comprising an electric motor associated with a cutting blade designed to perform the cutting of turf.

The prior art working devices usually have a frame movable on four wheels fixed to the frame. More specifically, a first pair of wheels constitutes a drive axis of the device positioned behind the normal direction of travel of the device, a second pair of wheels constitutes an idle axis of the device positioned in front of the normal direction of travel of the device. The self-propelled work devices must be able to move in any condition and on any ground, also uneven, and at the same time they must guarantee a good strength and rigidity for the support and correct operation of the motor-driven work apparatuses. More specifically, the need is particularly felt in the sector for self-propelled work devices which are able to guarantee a correct forward movement even in the presence of obstacles, whilst maintaining a high level of quality of the work which can be achieved. For example, in the case of a self-propelled device for cutting turf, the cutting module must have the blade always parallel to the work surface, that is, the turf. Often, the work devices of known type have limitations and difficulties in maintaining a correct positioning on the ground. An example of a known device in this field can be found in document EP0262285.

In this context, the technical purpose which forms the basis of this invention is to provide a self-propelled work device which overcomes at least some of the above-mentioned drawbacks of the prior art.

More specifically, the aim of this invention is to provide a self-propelled work device which is able to also move on uneven ground or surfaces, guaranteeing an excellent final result of the work to be carried out.

A further aim of this invention is to provide a self-propelled work device which has a simple and easy to maintain structure.

A further and different aim of this invention is to provide a self-propelled work device which has a modular and/or interchangeable structure with different work tools, such as, for example, a module with cutting blade for cutting turf or a module with movable brush for cleaning a paving or other floor covering.

These and other aims are substantially achieved by a self-propelled work device as described in one or more of the appended claims.

Further features and advantages are more apparent from the detailed description of non-limiting embodiments of a self-propelled work device according to this invention.

The dependent claims correspond to possible embodiments of the invention.

The description is provided below with reference to the accompanying drawings, which are also non-limiting and provided by way of example only, in which:
- Figure 1 is a perspective view from above of a self-propelled work device according to this invention;
- Figure 2 is a schematic side view of the self-propelled work device of Figure 1;
- Figure 3 is another perspective view from below of a self-propelled work device of Figure 1;
- Figure 4 is a front perspective view of a self-propelled work device according to a further embodiment of this invention;
- Figure 5 is a schematic plan view from below of the self-propelled work device of Figure 4;
- Figure 6A is a perspective view of the self-propelled work device according to this invention with some parts hidden to better illustrate others which would otherwise be hidden;
- Figure 6B is a further cross section view of the self-propelled work device of Figure 6A.

A self-propelled work device 1 along a work surface 100 according to this invention is described below.

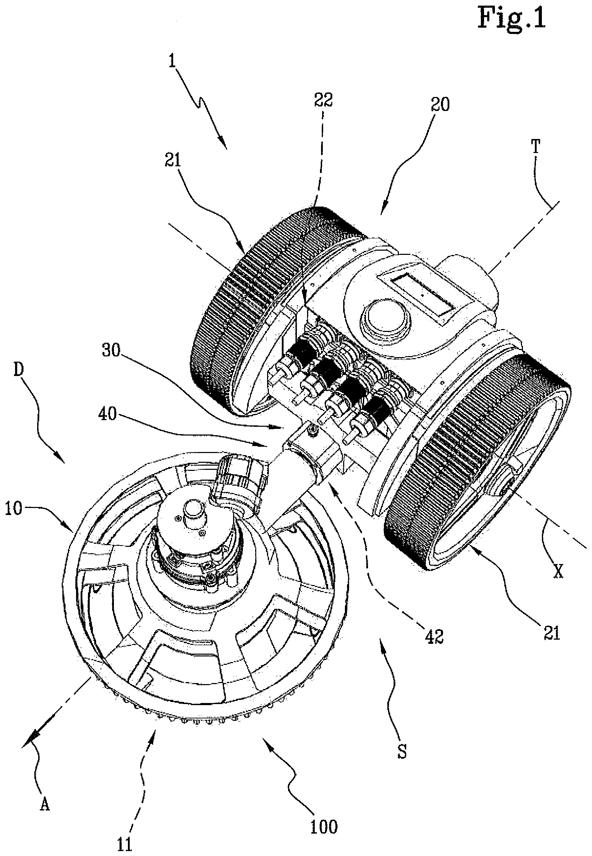

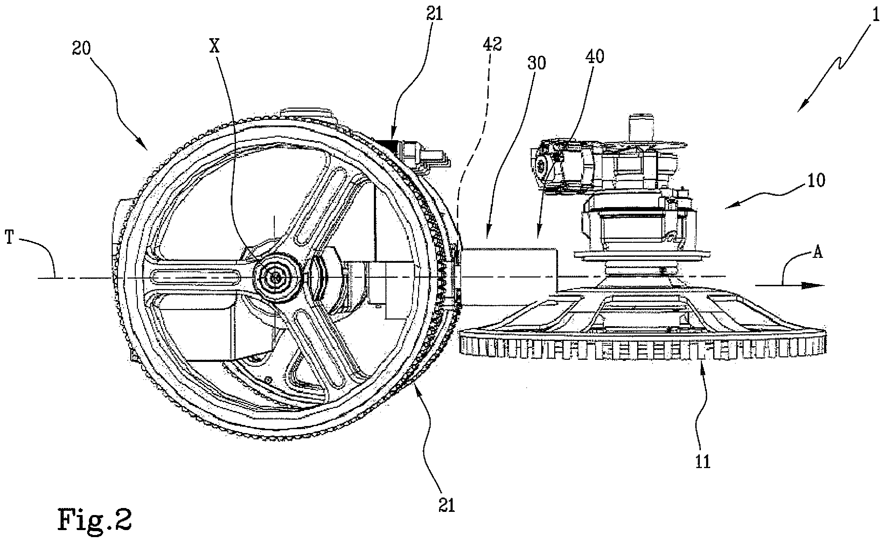

Figures 1 to 3 illustrate by way of a non-limiting example an embodiment of the self-propelled work device 1 in accordance with this invention.

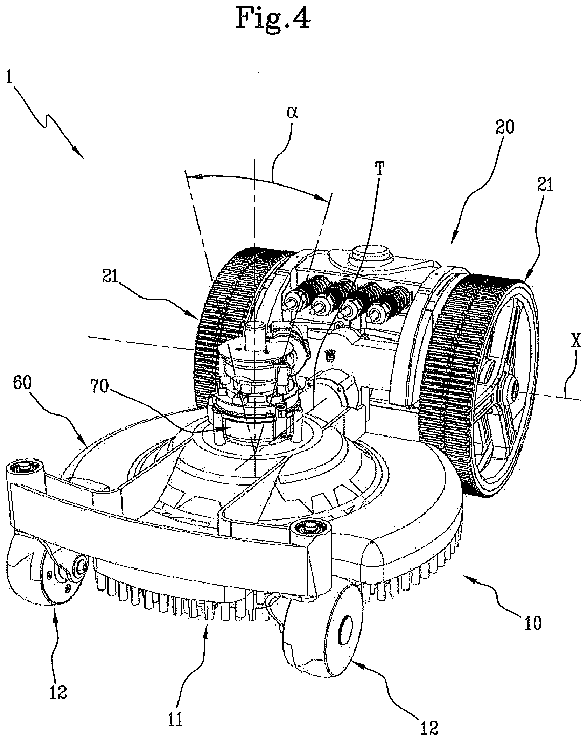

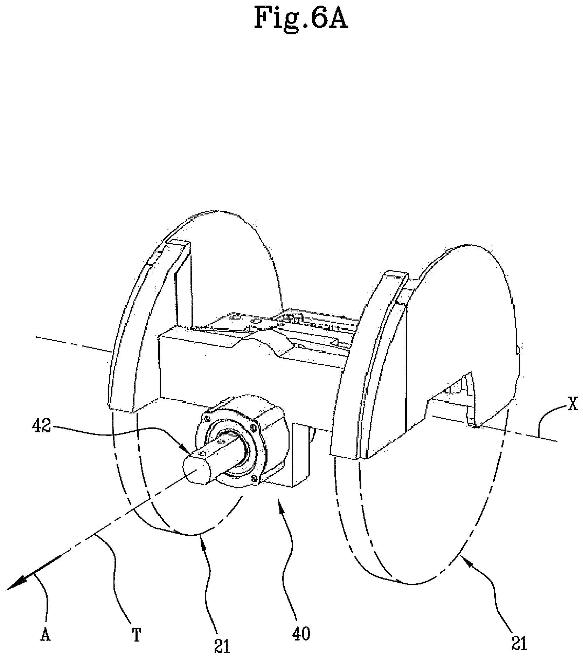

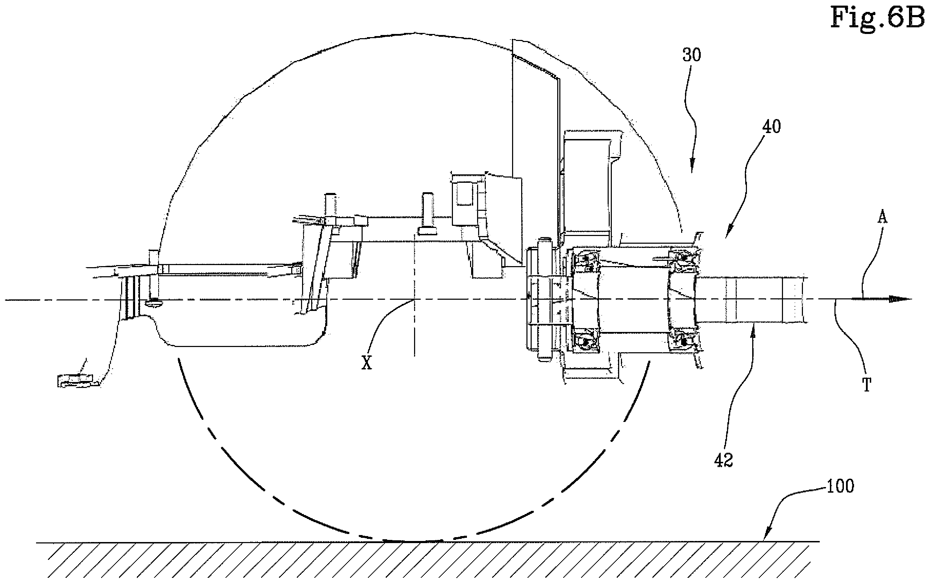

Figures 4 to 5 illustrate by way of a non-limiting example a further embodiment of the self-propelled work device 1 in accordance with this invention. Figures 6A and 6B illustrate in detail several elements belonging to the work device according to this invention, irrespective of the embodiment.

Preferably, the self-propelled work device 1 illustrated in the accompanying drawings is configured for cutting turf on regular and continuous ground 100, such as, for example, on lawns and uncultivated ground, private gardens, golf courses, communal green spaces and the like.

However, it should be noted that, in accordance with the inventive concept of this invention, the work device 1 comprises at least one motor-driven operating portion 10 which may have different configurations with different work tools 11 designed to perform a respective work in addition to that of cutting turf, such as, for example: a brush for cleaning a floor, a cloth disc for polishing a wooden floor, a rotary sponge for cleaning a tank or a swimming pool and the like.

Similarly, the work surface 100 in accordance with each specific configuration of the motor-driven operating portion 10 will be, precisely, a lawn, a floor, the surface of a tank and the like.

According to one possible embodiment illustrated in Figures 1 to 3, the self-propelled work device 1 comprises movement means 20 configured for moving the work device 1 along the work surface 100. More specifically, the operating portion 10 also comprises in addition to the working tool 11 a pair of idle wheels, not illustrated, preferably swivelling.

In accordance with the embodiment illustrated in the accompanying drawings and with what is specified above without limiting the invention, the work tool 11 is a cutting blade for turf.

More specifically, the movement means 20 comprise at least one pair of drive wheels 21 which are rotatable around a shared axis of rotation X and are configured to move the operating portion 10 along the working surface 100.

Preferably, the drive wheels 21 are coupled in pairs in accordance with the weight and the external dimensions of the motor-driven work device 1 in order to give the best performance in terms of seal on the turf 100 and of manoeuvring capacity during movements along the turf.

The movement means 20 comprise at least one electric actuator 22 for operating the above-mentioned drive wheels 21. Preferably, each drive wheel 21 is associated with a respective electric actuator 22 to define a movement with independent wheels of the self-propelled work device 1.

The self-propelled work device 1 comprises electric connecting means 30 interposed between the movement means 20 and the operating portion 10 in order to feed the operating portion 10 with an electric power from the movement means 20. For example, the movement means 20 comprise a rechargeable electric battery electrically connected to the above-mentioned electrical actuators 22 for the drive wheels 21 and also for feeding the operating portion 10 by means of an electric connection which may comprise electric wiring with electrical contacts (not illustrated in detail in the accompanying drawings).

The self-propelled work device 1 also comprises connecting means 40 configured for mechanically connecting to each other the operating portion 10 and the movement means 20.

The connecting means 40 are configured in such a way as to allow a relative movement between the operating portion 10 and the movement means 20, in particular where the operating portion 10 can rotate independently relative to the movement means 20 about an axis of oscillation "T".

Advantageously, the self-propelled work device 1 configured in this way is able to adapt the position of the operating portion 10 (and of the tool 11) to the various and changeable morphological conditions of the work surf 100 (turf) on which it is working.

The axis of oscillation "T" is positioned perpendicularly to the axis of rotation "X".

Preferably, the axis of rotation "X" and the axis of oscillation "T" are incident with each other, as illustrated by way of example in the cross section view of Figure 6B which illustrates only some components of the movement means 20 and the connecting means 40.

In further detail, the axis of rotation "X" and the axis of oscillation slanting "T" slant relative to each other. This means that the axes may be oriented perpendicularly to each other (in an imaginary plan view of the work device 1), but they are not incident to each other. This embodiment of the self-propelled work device 1 is not shown in the accompanying drawings.

The relative movement between the operating portion 10 and the movement means 20 is a rolling movement about the axis of rotation "T" wherein the operating portion 10 is able to rotate laterally on opposite sides "S", "D" relative to the axis of rotation "T", that is to say, a left and a right-hand side the self-propelled device 1.

Preferably, the operating portion 10 is able to roll on the left side "S" and on the right side "D" of the work device 1 identifying the direction of the axis of rotation "T" also as a direction normal feed "A" of the self-propelled work device 1 when in operation.

With particular reference to the configuration of the connecting means 40, they are such as to comprise a mechanical joint 41 rotatable about the axis of rotation "T", as illustrated schematically by way of a non-limiting example in Figures 6A and 6B. In a possible solution of the connecting means 40, the articulated joint 41 comprises a support bushing and a pin which can be inserted in the bushing in such a way as to rotate freely but without escaping from it.

With reference to the electrical connection between a source of electrical power, preferably housed in the movement means 20, and the operating portion 10, at least two different solutions are described below.

The connecting means 40 have mechanical the articulated joint 41 internally hollow so as to allow the passage of an electric cable. In other words, the connecting means 40 comprise an electrical cable passing inside the mechanical joint 41 and configured for electrically connecting the operating portion 10 with an electricity supply element housed on the movement means 20.

In accordance with a further possible embodiment of the connecting means 40, illustrated for example in Figures 6A and 6B, the connecting means 40 comprise an electric connection 42 rotatable (of the rotating and sliding electrical contacts type) preferably about the axis of rotation "T".

The rotary electrical connection 42 is configured for electrically connecting the operating portion 10 with a feed element housed on the movement means 20 irrespective of the relative rotation between the movement means 20 and the motor-driven operating portion 10.

The self-propelled work device 1 comprises an end-of-stroke member 50 operatively associated with the connecting means 40 and configured to limit the maximum angular extent "α" of rotation between the operating portion 10 and the movement means 20, as schematically illustrated by way of example in Figure 4.

Preferably, the end-of-stroke member 50 is designed to allow a maximum angular extent "α" of rotation between the operating portion 10 relative to the movement means 20 between a minimum value of approximately -30 degrees and a maximum value of approximately +30 degrees, preferably a minimum value of approximately -20 degrees and a maximum value of approximately +20 degrees.

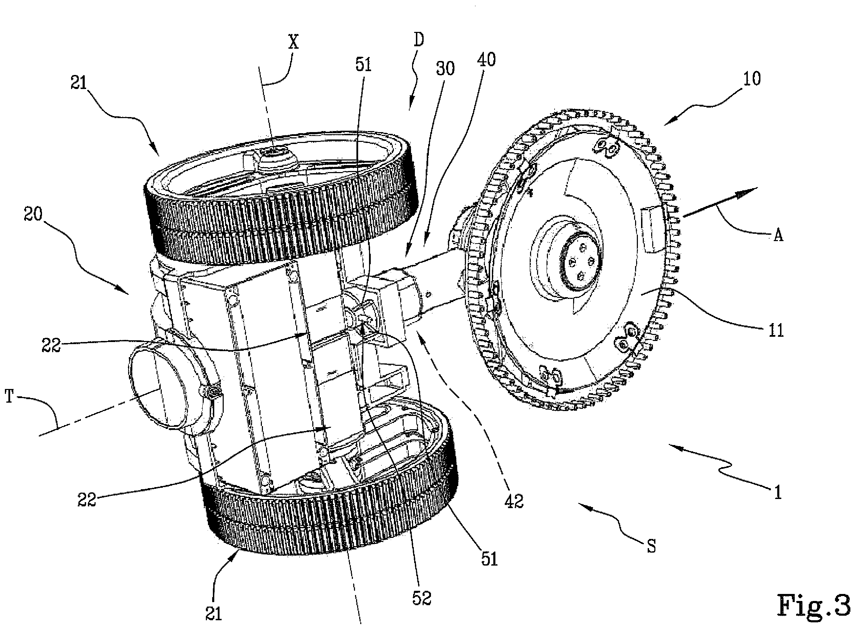

The end-of-stroke member 50 is active along the axis of oscillation "T" and has two contact surfaces 51 and a stop element 52 operatively associated with each other, as illustrated in Figure 3.

In other words, the end-of-stroke member 50 is structurally shared between the movement means 20 such as to comprise the above-mentioned contact surfaces 51 and the motor-driven operating portion 10 such as to comprise the stop element 52. In effect, the contact surfaces 51 are made by a shortage of material on the movement means 20, preferably at the connecting means 40. The stop element 52 is rigidly attached to the motor-driven operating portion 10, preferably the stop element 52 is positioned on the axis of oscillation "T" and has a pin such as to extend laterally from the above-mentioned axis of oscillation "T" for a length which is predefined and proportional to the extension of the contact surfaces 51.

Therefore, when the self-propelled work device 1 is operating and the operating portion 10 follows, by rotation, the trend of the work surface 100, the stop element 52 is rotated with it to abut against one of the two contact surfaces 51 on a side "S" or on the opposite side "D" in such a way as to prevent a further rotation of the stop element 52 and the operating portion 10, on that specific side (S or D) of the work device 1.

According to this invention, the self-propelled work device 1, also comprises an inclination sensor, not illustrated in the accompanying drawings, operatively associated with the connecting means 40 and configured to measure a value of angular deviation of the operating portion 10 relative to the movement means 20 and to interrupt the electricity supply of the electrical connection means 30 when the angular deviation value exceeds a predetermined limit value "α" or when this limit value is achieved too suddenly.

In other words, advantageously, this invention has a protection or limit of rotation of the operating portion 10 relative to the movement means 20 of a mechanical type, as described above, and is also provided with a an electrical/electronic safety device in case the self-propelled work device 1 is moved along steep a slope which could cause the overturning, leaving the work tool uncovered in a dangerous manner.

In addition to the above, the self-propelled work device 1 comprises a position sensor, not illustrated in the accompanying drawings, which is operatively associated with the operating portion 10 and/or the movement means 20 and is configured to detect a position of the operating device 1 and to disconnect the electricity supply at least from the operating portion 10 and/or to change the feed direction "A" acting on the electric connecting means 30 when the work device 1 is in a work position which does not correspond to a work position lying on the work surface 100. In other words, if a user lifts the work device 1 in operation from the work surface 100, the position sensor makes it possible to interrupt the electricity supply of the blade and/or drive wheels in such a way as to prevent any possible hazard condition for the user.

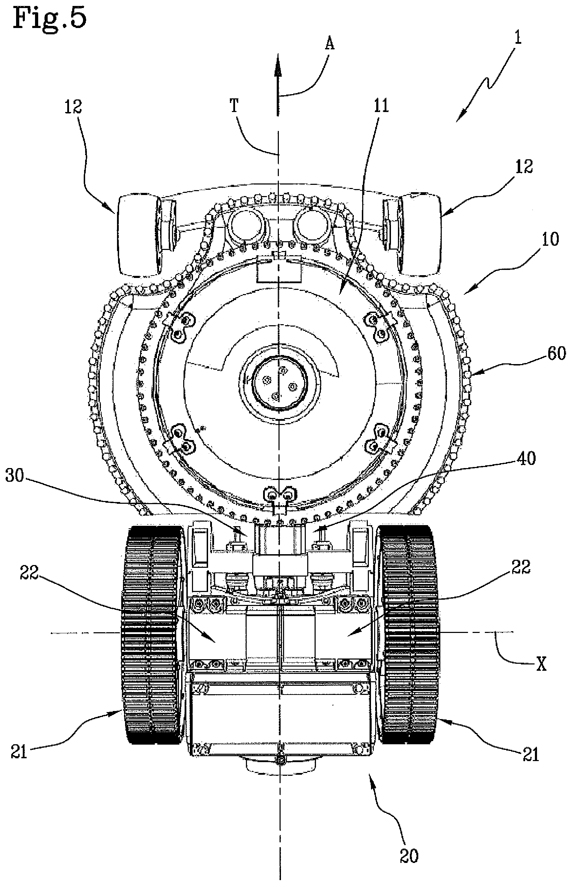

As mentioned above, in accordance with a different embodiment of this invention, illustrated by way of example in Figures 4 and 5, the self-propelled work device 1 is such as to comprising a supporting structure 60 configured for housing a power-driven work module 70; movement means 20 comprising at least one pair of driving wheels 21 rotatable about the shared axis of rotation "X"; connecting means 40 configured for connecting together the supporting structure 60 and the movement means 20 in such a way as to allow a relative movement between them.

Preferably, the supporting structure 60 can rotate independently relative to the movement means 20 about the axis of oscillation "T" positioned perpendicularly to the axis of rotation "X" of the drive wheels 21.

The work device 1 in this embodiment also comprises a power-driven work tool 11, removably connected to the supporting structure 60.

Advantageously, this solution allows a large interchangeability of tools and a high flexibility of use of the self-propelled work device 1.

It should be noted that the features of the embodiment of the device 1 described above and those initially described are identical except for the sole difference that the work tool 11 and/or the drive motor and/or the swivelling idle wheels 12 are detachable to allow a change of planned use of the work device 1.

This invention fulfils the preset aims.

Advantageously, this invention provides a self-propelled work device with a precision of execution of the work and a structure configured to allow a rapid and easy change of planned use of the device itself.

Advantageously, this invention provides a self-propelled work device equipped with precise and efficient passive and active safety systems, thus preventing a user from accidentally injuring themselves.

Advantageously, the self-propelled work device according to this invention is able to perform in an autonomous and automatic manner the predetermined work without requiring the direct intervention of a user, except for when the latter wishes to change the planned of use of the device, by changing work tool and/or work module.

Advantageously, this invention provides a self-propelled work device which is able to follow in an optimum manner each type of work surface, irrespective of the morphology and the slope of the surface, performing a homogeneous and precise cut.

## Claims

1. A self-propelled work device (1), comprising:
- at least one motor-driven operating portion (10);
- movement means (20) comprising at least one pair of drive wheels (21) which are rotatable around a shared axis of rotation (X) and are configured to move the operating portion (10) along a working surface (100);
- connecting means (40) configured for connecting together the operating portion (10) and the movement means (20) in such a way as to allow a relative movement between them, wherein the connecting means (40) comprise a mechanical joint (41) rotatable about an axis of rotation (T) and wherein the operating portion (10) can rotate independently relative to the movement means (20) about the axis of oscillation (T) positioned perpendicularly to the axis of rotation (X); **characterised in that** it comprises electrical connection means (30) interposed between the movement means (20) and the operating portion (10) for supplying the operating portion (10) with an electrical power from the movement means (20), the connection means (30) comprising at least one electric cable, the rotatable mechanical joint (41) being internally hollow so as to allow inside of it the passage of the at least one electric cable and wherein the electric cable is configured for electrically connecting the operating portion (10) with a supply element housed on the movement means (20).

2. The device (1) according to claim 1, wherein the relative movement between the operating portion (10) and the movement means (20) is a rolling movement around the axis of rotation (T) wherein the operating portion (10) is capable of rotating laterally on opposite sides (S, D) relative to the axis of rotation (T).

3. The device (1) according to claim 1 or 2, wherein the axis of rotation (X) and the axis of oscillation (T) slant relative to each other.

4. The device (1) according to one of claims 1 or 2, wherein the axis of rotation (X) and the axis of oscillation (T) are incident to each other.

5. The device (1) according to any one of claims 1 to 4, wherein the work device (1) comprises an end-of-stroke member (50) which is operatively associated with the connecting means (40) and is configured to limit the maximum angular extent (α) of rotation between the operating portion (10) and the movement means (20).

6. The device (1) according to any one of claims 1 to 5, wherein the operating portion (10) comprises a tool (11) and a pair of idle and preferably swivel wheels (12).

7. The device (1) according to any one of claims 1 to 6, wherein the movement means (20) comprise at least one electric actuator for activating the drive wheels (21), each drive wheel (21) being preferably associated with a respective electric actuator (22) to define an independent wheel movement.

8. The device (1) according to claim 1, comprising an inclination sensor which is operatively associated with the connecting means (40) and is configured to detect an angular deviation value of the operating portion (10) relative to the movement means (20) and to interrupt the electricity supply of the electric connecting means (30) when the angular deviation value exceeds a predetermined limit angular value (α).

9. The device (1) according to claim 1, comprising a position sensor which is operatively associated with the operating portion (10) and/or the movement means (20) and is configured to detect a position of the operating device (1) in order to disconnect the electricity supply at least from the operating portion (10) and/or to change the feed direction (A) acting on the electric connecting means (30) when the operating device (1) is in the position which does not correspond to a working position lying on the working surface (100) in an operating configuration of the self-propelled work device (1).

10. The device (1) according to any one of the preceding claims 6-9, wherein the work tool (11) and/or the drive motor and/or the swivelling idle wheels (12) are detachably connected to the device (1).

## Patentansprüche

1. Selbstfahrendes Arbeitsgerät (1), umfassend:
- mindestens einen motorbetriebenen Betätigungsabschnitt (10);
- Bewegungsmittel (20) umfassend mindestens ein Paar Antriebsräder (21), die um eine gemeinsame Drehachse (X) drehbar sind und dazu konfiguriert sind, um den Betätigungsabschnitt (10) entlang einer Arbeitsfläche (100) zu bewegen;
- Verbindungsmittel (40), die so konfiguriert sind, dass sie den Betätigungsabschnitt (10) und die Bewegungsmittel (20) derart miteinander verbinden, dass eine relative Bewegung zwischen ihnen ermöglicht wird, wobei die Verbindungsmittel (40) ein mechanisches Gelenk (41) umfassen, das um eine Drehachse (T) drehbar ist und wobei der Betätigungsabschnitt (10) sich relativ zu den Bewegungsmitteln (20) um die Schwingachse (T), die senkrecht zur Drehachse (X) positioniert ist, unabhängig drehen kann; **dadurch gekennzeichnet, dass** es elektrische Verbindungsmittel (30) umfasst, die zwischen den Bewegungsmitteln (20) und dem Betätigungsabschnitt (10) angeordnet sind, um den Betätigungsabschnitt (10) mit elektrischer Energie von den Bewegungsmitteln (20) zu versorgen, wobei die Verbindungsmittel (30) mindestens ein elektrisches Kabel umfassen, wobei das drehbare mechanische Gelenk (41) innen hohl ist, um in ihm den Durchgang des mindestens einen elektrischen Kabels zu ermöglichen, und wobei das elektrische Kabel zum elektrischen Verbinden des Betätigungsabschnitts (10) mit einem auf den Bewegungsmitteln (20) untergebrachten Versorgungselement konfiguriert ist.

2. Gerät (1) nach Anspruch 1, wobei die Relativbewegung zwischen dem Betätigungsabschnitt (10) und den Bewegungsmitteln (20) eine Rollbewegung um die Drehachse (T) ist, wobei der Betätigungsabschnitt (10) fähig ist, sich auf gegenüberliegenden Seiten (S, D) relativ zur Drehachse (T) seitlich zu drehen.

3. Gerät (1) nach Anspruch 1 oder 2, wobei die Drehachse (X) und die Schwingachse (T) relativ zueinander geneigt sind.

4. Gerät (1) nach einem der Ansprüche 1 oder 2, wobei die Drehachse (X) und die Schwingachse (T) aufeinander treffen.

5. Gerät (1) nach einem der Ansprüche 1 bis 4, wobei das Arbeitsgerät (1) ein Endlagenelement (50) umfasst, das betriebswirksam mit den Verbindungsmitteln (40) assoziiert ist und konfiguriert ist, um die maximale Winkelausdehnung (α) der Drehung zwischen dem Betätigungsabschnitt (10) und den Bewegungsmitteln (20) zu begrenzen.

6. Gerät (1) nach einem der Ansprüche 1 bis 5, wobei der Betätigungsabschnitt (10) ein Werkzeug (11) und ein Paar Leerlauf- und vorzugsweise Schwenkräder (12) umfasst.

7. Gerät (1) nach einem der Ansprüche 1 bis 6, wobei die Bewegungsmittel (20) mindestens einen elektrischen Aktuator zum Aktivieren der Antriebsräder (21) umfassen, wobei jeder Antriebsrad (21) vorzugsweise mit einem jeweiligen elektrischen Aktuator (22) zum Definieren einer unabhängigen Radbewegung assoziiert ist.

8. Gerät (1) nach Anspruch 1, umfassend einen Neigungssensor, der betriebswirksam mit den Verbindungsmitteln (40) assoziiert ist und konfiguriert ist, um einen Winkelabweichungswert des Betätigungsabschnitts (10) relativ zu den Bewegungsmitteln (20) zu erfassen und die Stromversorgung der elektrischen Verbindungsmittel (30) zu unterbrechen, wenn der Winkelabweichungswert einen vorbestimmten Grenzwinkelwert (a) überschreitet.

9. Gerät (1) nach Anspruch 1, umfassend einen Positionssensor, der betriebswirksam mit dem Betätigungsabschnitt (10) und/oder den Bewegungsmitteln (20) assoziiert ist und konfiguriert ist, um eine Position des Betätigungsgeräts (1) zu erfassen, um die Stromversorgung mindestens von dem Betätigungsabschnitt (10) zu trennen und/oder die auf die elektrischen Verbindungsmittel (30) einwirkende Zuführrichtung (A) zu ändern, wenn sich das Betätigungsgerät (1) in der Position befindet, die nicht einer auf der Arbeitsfläche (100) liegenden Arbeitsposition in einer Betriebskonfiguration des selbstfahrenden Arbeitsgeräts (1) entspricht.

10. Gerät (1) nach einem der vorhergehenden Ansprüche 6-9, wobei das Arbeitswerkzeug (11) und/oder der Antriebsmotor und/oder die schwenkbaren Leerlaufräder (12) lösbar mit dem Gerät (1) verbunden sind.

## Revendications

1. Dispositif de fonctionnement automoteur (1), comprenant :
- au moins une partie fonctionnelle motorisée (10) ;
- des moyens de déplacement (20) comprenant au moins une paire de roues motrices (21) pouvant tourner autour d'un axe de rotation partagé (X) et étant configurées pour déplacer la partie fonctionnelle (10) le long d'une surface de travail (100) ;
- des moyens de raccordement (40) configurés pour raccorder ensemble la partie fonctionnelle (10) et les moyens de déplacement (20) de manière à permettre un mouvement relatif entre eux, dans lequel les moyens de raccordement (40) comprennent un joint mécanique (41) pouvant pivoter autour d'un axe de rotation (T) et dans lequel la partie fonctionnelle (10) peut tourner de façon indépendante par rapport aux moyens de déplacement (20) autour de l'axe d'oscillation (T) positionné perpendiculairement à l'axe de rotation (X) ; **caractérisé en ce qu'**il comprend des moyens de raccordement électriques (30) interposés entre les moyens de déplacement (20) et la partie fonctionnelle (10) pour alimenter la partie fonctionnelle (10) en énergie électrique à partir des moyens de déplacement (20), les moyens de raccordement (30) comprenant au moins un câble électrique, le joint mécanique pivotant (41) étant creux en son sein de sorte à permettre à l'intérieur de celui-ci le passage de l'au moins un câble électrique et dans lequel le câble électrique est configuré pour raccorder électriquement la partie fonctionnelle (10) à un élément d'alimentation logé sur les moyens de déplacement (20).

2. Dispositif (1) selon la revendication 1, dans lequel le déplacement relatif entre la partie fonctionnelle (10) et les moyens de déplacement (20) est un mouvement de roulement autour de l'axe de rotation (T) dans lequel la partie fonctionnelle (10) est capable de pivoter latéralement sur des côtés opposés (S, D) par rapport à l'axe de rotation (T).

3. Dispositif (1) selon la revendication 1 ou 2, dans lequel l'axe de rotation (X) et l'axe d'oscillation (T) s'inclinent l'un par rapport à l'autre.

4. Dispositif (1) selon l'une des revendications 1 ou 2, dans lequel l'axe de rotation (X) et l'axe d'oscillation (T) sont incidents l'un par rapport à l'autre.

5. Dispositif (1) selon l'une quelconque des revendications de 1 à 4, dans lequel le dispositif de fonctionnement (1) comprend un organe de fin de course (50) étant fonctionnellement associé aux moyens de raccordement (40) et étant configuré pour limiter l'amplitude angulaire maximum (α) de rotation entre la partie fonctionnelle (10) et les moyens de déplacement (20) .

6. Dispositif (1) selon l'une quelconque des revendications de 1 à 5, dans lequel la partie fonctionnelle (10) comprend un outil (11) et une paire de roues folles et, de préférence, de roues pivotantes (12) .

7. Dispositif (1) selon l'une quelconque des revendications de 1 à 6, dans lequel les moyens de déplacement (20) comprennent au moins un actionneur électrique servant à activer les roues motrices (21), chaque roue motrice (21) étant, de préférence, associée à un actionneur électrique (22) respectif pour définir un déplacement de roue indépendant.

8. Dispositif (1) selon la revendication 1, comprenant un détecteur d'inclinaison étant fonctionnellement associé aux moyens de raccordement (40) et étant configuré pour détecter une valeur de déviation angulaire de la partie fonctionnelle (10) par rapport aux moyens de déplacement (20) et pour couper l'alimentation électrique des moyens de raccordement électriques (30) lorsque la valeur de déviation angulaire excède une valeur angulaire limite (α) prédéterminée.

9. Dispositif (1) selon la revendication 1, comprenant un détecteur de position étant fonctionnellement associé à la partie fonctionnelle (10) et/ou aux moyens de déplacement (20) et étant configuré pour détecter une position du dispositif fonctionnel (1) afin de couper l'alimentation électrique au moins de la partie fonctionnelle (10) et/ou pour modifier la direction d'alimentation (A) agissant sur les moyens de raccordement électriques (30) lorsque le dispositif fonctionnel (1) se trouve dans la position ne correspondant pas à une position de travail reposant sur la surface de travail (100) dans une configuration fonctionnelle du dispositif de fonctionnement automoteur (1).

10. Dispositif (1) selon l'une quelconque des revendications précédentes de 6 à 9, dans lequel l'outil de travail (11) et/ou le moteur d'entraînement et/ou les roues folles pivotantes (12) sont raccordées de façon amovible au dispositif (1).
